# FASCICULE DE BREVET EUROPEEN

(11) **EP 1 715 166 B1**
(45) Date de publication et mention de la délivrance du brevet: **07.11.2007**
(21) Numéro de dépôt: 06300374.3
(22) Date de dépôt: 19.04.2006
(51) Int. Cl.: F02D 41/22, G01L 27/00

(54) **Système de diagnostic du fonctionnement d'un capteur de pression d'admission des gaz dans un moteur de véhicule automobile**
System zur Diagnose der Funktion eines Drucksensors im Ansaugbereich eines Automobilmotors
System for diagnosing the operation of a pressure sensor within the intake manifold of a vehicle engine

(30) Priorité: 22.04.2005 FR 0504082
(43) Date de publication de la demande: 25.10.2006
(73) Titulaire: Peugeot Citroen Automobiles SA, 78943 Vélizy-Villacoublay Cedex (FR)
(72) Inventeur: Malet, Claire, 75018, PARIS (FR); Renault, Anaïs, La plaine Saint Denis 93210 (FR)
(74) Mandataire: Ménès, Catherine

(56) Documents cités:
- DE-C1- 10 021 639
- US-A- 4 483 299
- US-B1- 6 192 866

## Description

La présente invention concerne un système de diagnostic du fonctionnement d'un capteur d'admission de gaz dans un moteur de véhicule automobile.

Un tel système constitue également une aide à la localisation de défauts pour les services d'après-vente d'un constructeur de véhicules automobiles.

Il existe déjà dans l'état de la technique (c.f. US 4.483.299), des systèmes de diagnostic de cohérence entre capteurs qui permettent de détecter un défaut mais pas de déterminer la cause de celui-ci.

En effet, ce défaut peut provenir de l'un des capteurs de la boucle d'alimentation en air du moteur ou alors d'une fuite par exemple dans une durite quelconque de celle-ci.

Le capteur de pression d'admission est souvent mis en cause et est changé très fréquemment alors que la cause du défaut provient d'une autre pièce, ce qui montre l'intérêt d'un tel diagnostic intrinsèque de cette pièce.

Le but de l'invention est donc de proposer un tel système.

A cet effet, l'invention a pour objet un système de diagnostic du fonctionnement d'un capteur de pression d'admission des gaz dans un moteur de véhicule automobile, caractérisé en ce qu'il comporte des moyens d'acquisition de la valeur de pression d'admission au démarrage du moteur et lorsque celui-ci atteint un régime de ralenti, des moyens de calcul de la différence entre ces pressions et des moyens de comparaison de cette différence de pression à une valeur de seuil de pression pour diagnostiquer un bon fonctionnement du capteur si la différence de pression est supérieure à cette valeur de seuil ou si ce n'est pas le cas, enclencher le fonctionnement de moyens d'acquisition du débit d'air admis au moment du démarrage du moteur du véhicule et de moyens de comparaison de ce débit à une valeur de seuil de débit prédéterminée, pour, si le débit est supérieur à cette valeur de seuil, détecter un défaut de fonctionnement du capteur et dans le cas contraire, un défaut de raccordement dans la boucle d'admission d'air du moteur.

Suivant une autre caractéristique de l'invention :
- les valeurs de seuil sont calibrables.

L'invention sera mieux comprise à la lecture de la description qui va suivre, donnée uniquement à titre d'exemple et faite en se référant aux dessins annexés, sur lesquels :
- la Fig.1 représente un organigramme illustrant le fonctionnement d'un système de diagnostic selon l'invention ; et
- les Fig.2, 3 et 4 représentent différents graphiques illustrant les différentes acquisitions et détections mises en oeuvre dans un tel système.

En fait, la défaillance d'un capteur de pression d'admission des gaz dans un moteur de véhicule est principalement de type court-circuit pour plus de 98% des cas, ce qui entraîne un signal plat à la sortie de ce capteur et dont la valeur dépend du type de court-circuit (valeur haute, basse ou intermédiaire).

En comportement normal, le moteur aspirant de l'air au démarrage, une dépression se crée au niveau du capteur de pression d'admission qui envoie alors une décroissance sur son signal de sortie.

En alliant ces deux principes, sur demande des services après-vente, un test au démarrage, détectant la dépression, permet de mettre en évidence un tel signal de sortie plat du capteur.

En cas de non détection de la dépression d'air d'admission, deux causes peuvent être envisagées, à savoir un débranchement d'une durite quelconque de la boucle d'air d'alimentation du moteur ou une défaillance du capteur.

Un test complémentaire sur le débit d'air admis permet alors de déterminer la cause. Si ce débit dépasse un seuil calibrable au moment du démarrage du moteur, les durites ne sont pas débranchées et la cause vient alors du capteur qu'il faut changer.

Dans le cas où l'on arrive à la conclusion d'une durite débranchée, on ne peut pas conclure sur l'état du capteur de pression d'air d'admission, car c'est alors un cas de détection d'un double défaut.

Il est alors nécessaire de réparer la durite et de refaire le test.

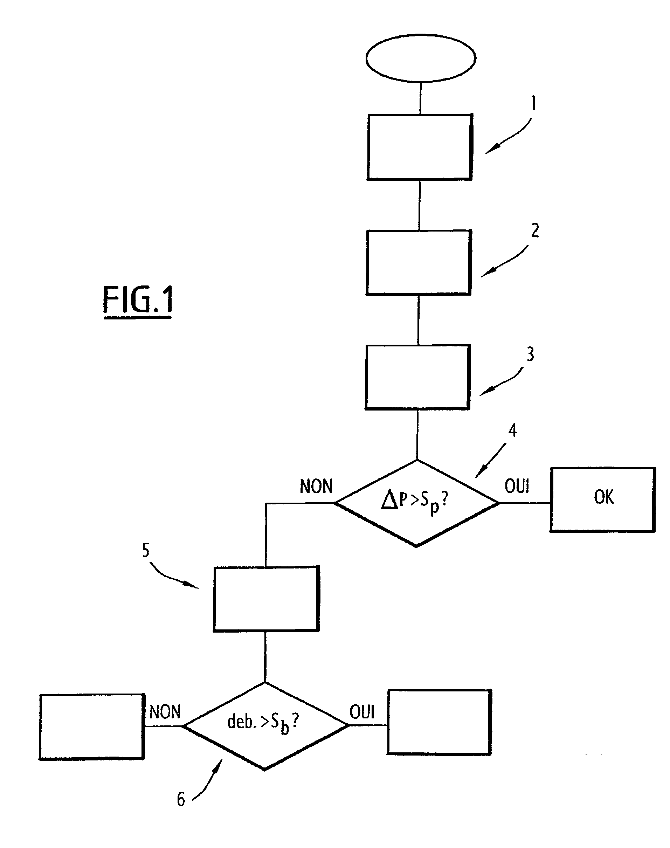

En fait, et comme cela est illustré sur la figure 1, le système de diagnostic selon l'invention peut être intégré par exemple dans un calculateur quelconque raccordé à ce capteur, pour assurer un certain nombre de mesures et d'analyses.

Ainsi, sur la figure 1, ce système utilise tout d'abord des moyens d'acquisition de la pression d'acquisition des gaz dans le moteur pour, lors d'une étape désignée par la référence générale 1, faire l'acquisition de la valeur de pression d'admission au démarrage du moteur, puis lors de l'étape désignée par la référence générale 2, lorsque ce moteur a atteint un régime de ralenti.

Lors de l'étape 3, la différence de pression entre ces deux pressions acquises est calculée.

Lors de l'étape 4, cette différence de pression est comparée à une valeur de seuil de pression prédéterminée Sp, par exemple calibrable. Si la différence de pression est supérieure à la valeur de seuil, le capteur fonctionne correctement.

Par contre, si ce n'est pas le cas, on enclenche alors une phase d'analyse du débit d'air admis dans le moteur par les moyens correspondants.

Lors de l'étape 5, le débit d'air admis est acquis au moment du démarrage du moteur du véhicule.

En 6, ce débit d'air acquis est comparé à une valeur de seuil de débit prédéterminée S_{b}, par exemple programmable.

Si le débit d'air acquis est supérieur à la valeur de seuil, alors c'est le capteur qui est en panne. Si ce n'est pas le cas, c'est-à-dire si le débit d'air est inférieur à la valeur de seuil, alors une durite quelconque de la boucle d'air est débranchée.

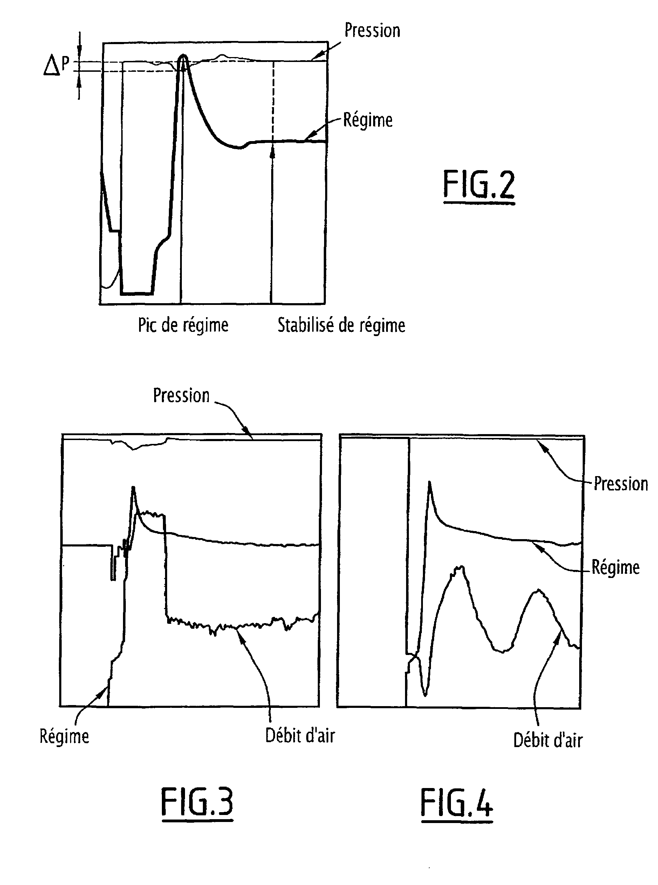

Ces différentes opérations sont illustrées sur les figures 2, 3 et 4 qui illustrent le régime du moteur, la pression d'alimentation d'air et le débit d'air, les échelles utilisées sur les graphiques des figures 3 et 4 n'étant pas les mêmes.

Sur la figure 2, on a illustré la détermination de la différence de pression au moment du pic de régime lors du démarrage du moteur et lorsque celui-ci a atteint un régime de rotation stabilisé.

Sur la figure 3, on peut constater que le capteur de pression est en bon état de fonctionnement et que les durites de la boucle d'air sont correctement branchées.

Par contre, sur la figure 4, le capteur de pression d'alimentation est en bon état de fonctionnement, mais une durite de la boucle d'air est débranchée.

Ainsi, le test de la pression d'admission d'air doit détecter une dépression au démarrage du moteur. Pour ce faire, on enregistre alors la valeur de pression au pic de régime correspondant au démarrage du moteur et la valeur de pression lorsque celui-ci est en régime stabilisé. La différence entre ces pressions doit être supérieure à une valeur de seuil prédéterminée calibrable pour pouvoir diagnostiquer un bon état de fonctionnement de ce capteur.

Dans le cas contraire, il convient alors de déclencher l'opération d'analyse du débit d'air.

Celui-ci est analysé au moment du pic de régime qui correspond au démarrage du moteur du véhicule et si le débit est supérieur à une valeur de seuil calibrable prédéterminée, alors il n'y a pas de durite débranchée dans la boucle d'air. On peut également déterminer que le problème vient alors du capteur de pression d'admission.

Bien entendu, d'autres modes de réalisation encore peuvent être envisagés.

## Revendications

1. Système de diagnostic du fonctionnement d'un capteur de pression d'admission des gaz dans un moteur de véhicule automobile, **caractérisé en ce qu'**il comporte des moyens (1, 2) d'acquisition de la valeur de pression d'admission au démarrage du moteur et lorsque celui-ci atteint un régime de ralenti, des moyens (3) de calcul de la différence entre ces pressions et des moyens (4) de comparaison de cette différence de pression à une valeur de seuil de pression pour diagnostiquer un bon fonctionnement du capteur si la différence de pression est supérieure à cette valeur de seuil ou si ce n'est pas le cas, enclencher le fonctionnement de moyens (5) d'acquisition du débit d'air admis au moment du démarrage du moteur du véhicule et de moyens de comparaison (6) de ce débit à une valeur de seuil de débit prédéterminée, pour, si le débit est supérieur à cette valeur de seuil, détecter un défaut de fonctionnement du capteur et dans le cas contraire, un défaut de raccordement dans la boucle d'admission d'air du moteur.

2. Système selon la revendication 1, **caractérisé en ce que** les valeurs de seuil sont calibrables.

## Claims

1. System for diagnosing the operation of a gas intake pressure sensor in a motor vehicle engine, **characterized in that** it comprises means (1, 2) of acquiring the intake pressure value on engine start-up and when this engine reaches idling speed, means (3) for calculating the difference between these pressures and means (4) for comparing this difference in pressure against a pressure threshold value in order to diagnose correct operation of the sensor if the pressure difference is above this threshold value or, if it is not, to trigger the operation of means (5) for acquiring the air flow rate admitted at the time of vehicle engine start-up and of means (6) of comparing this flow rate with a predetermined flow rate threshold value in order, if the flow rate is above this threshold value, to detect that the sensor is operating defectively and, if not, that there is a defective connection in the engine air intake system.

2. System according to Claim 1, **characterized in that** the threshold values can be adjusted.

## Patentansprüche

1. System zur Diagnose des Betriebs eines Gaszufuhrdrucksensors in einem Kraftfahrzeugmotor, **dadurch gekennzeichnet, dass** es Mittel (1, 2) zur Erfassung des Zufuhrdruckwerts beim Start des Motors und wenn dieser eine Leerlaufdrehzahl erreicht, Mittel (3) zur Berechnung der Differenz zwischen diesen Drücken und Mittel (4) zum Vergleich dieser Druckdifferenz mit einem Druckschwellwert aufweist, um einen einwandfreien Betrieb des Sensors zu diagnostizieren, wenn die Druckdifferenz über diesem Schwellwert liegt, oder, wenn dies nicht der Fall ist, den Betrieb von Mitteln (5) zur Erfassung der Luftmenge, die im Moment des Starts des Motors des Fahrzeugs zugeführt wird, und Mittel (6) zum Vergleich dieser Menge mit einem vorbestimmten Mengenschwellwert einzuschalten, um, wenn die Menge über diesem Schwellwert liegt, einen Betriebsfehler des Sensors, und im gegenteiligen Fall einen Verbindungsfehler in der Luftzufuhrschleife des Motors zu erkennen.

2. System nach Anspruch 1, **dadurch gekennzeichnet, dass** die Schwellwerte kalibrierbar sind.
